# EUROPÄISCHE PATENTSCHRIFT

(11) **EP 3 867 007 B1**
(45) Veröffentlichungstag und Bekanntmachung des Hinweises auf die Patenterteilung: **25.03.2026**
(21) Anmeldenummer: 19783495.5
(22) Anmeldetag: 04.10.2019
(51) Int. Cl.: B23P 15/14, B24B 21/16, B24B 21/00, B21H 5/00, E05F 15/697, B24B 49/14, B24D 15/00, H02K 7/116, F16H 55/22, F16H 57/04, F16H 57/00, F16H 55/24, B60N 2/02

(54) **VERFAHREN ZUM HERSTELLEN EINER GETRIEBESCHNECKE, DIE INSBESONDERE AUF EINER ANKERWELLE ANGEORDNET IST**
METHOD FOR PRODUCING A GEAR WORM WHICH IS LOCATED IN PARTICULAR ON AN ARMATURE SHAFT
PROCÉDÉ DE FABRICATION D'UNE VIS SANS FIN D'ENGRENAGE DISPOSÉE EN PARTICULIER SUR UN ARBRE D'ANCRAGE

(30) Priorität: 15.10.2018 DE 102018217617
(43) Veröffentlichungstag der Anmeldung: 25.08.2021
(73) Patentinhaber: Robert Bosch GmbH, 70442 Stuttgart (DE)
(72) Erfinder: HERTWIG, Otmar, 77815 Buehl (DE); BAO, Jie, Shanghai, Jiangsu 200335 (CN); HERTWECK, Volker, 76532 Baden-Baden (DE); QIAO, Guang, Shanghai, Jiangsu 201800 (CN); DE GRAAFF, Bernhard, 76137 Karlsruhe (DE); CETTIER, Daniel, 76137 Karlsruhe (DE); THOENE, Holger, 76437 Rastatt (DE)
(86) Internationale Anmeldenummer: PCT/EP2019/076863
(87) Internationale Veröffentlichungsnummer: WO 2020/078734

(56) Entgegenhaltungen:
- EP-A1- 1 780 446
- EP-A2- 2 208 915
- CN-A- 107 433 368
- CN-U- 206 169 828
- DE-A1- 102017 204 835
- DE-A1- 4 132 115
- JP-A- 2003 207 031
- JP-A- 2007 155 120
- JP-A- 2007 292 179

## Beschreibung

### Stand der Technik

Die Erfindung betrifft ein Verfahren zum Herstellen einer Getriebeschnecke, die insbesondere auf einer Ankerwelle angeordnet.

Mit der DE 102 011 006 276 A1 ist ein Zahnrad bekannt geworden, an dessen Zahnflankenflächen axiale Rillen ausgebildet sind, die als Schmiermitteldepot dienen. Durch diese Rillen kann während dem Betrieb Schmiermittel an die reibungskritischen Bereiche einer Verzahnung geführt werden, ohne dass das Schmiermittel vollständig verdrängt wird. Ein solches Zahnrad kann beispielweise auch als Schneckenrad für ein Schneckengetriebe ausgebildet sein. Durch solch eine Ausbildung kann zwar eine zuverlässige Schmierung der Verzahnung gewährleistet werden, jedoch besteht dabei die Tendenz, dass die Selbsthemmung eines solchen Getriebes durch die kontinuierliche Schmierung reduziert wird. Es gibt jedoch Anwendungen, wie beispielsweise Stellantriebe im Kraftfahrzeug, die Fensterscheiben, Schiebedächer oder Sitzteile verstellen, bei denen beim Stillstand des elektrischen Antriebs eine höhere Selbsthemmung erwünscht ist, um das zu verstellende Teil in der Endposition zu halten. Daher ist es Aufgabe der Erfindung, einerseits ein Getriebe mit einer zuverlässigen Schmierung herzustellen, bei dem gleichzeitig die Selbsthemmung gezielt eingestellt werden kann.

Mit der JP 2003 207031 A ist eine Getriebeschnecke bekannt geworden, bei der auf die Zahnflanken über die gesamte Länge der Schneckenverzahnung zwei helix-förmige Nuten ausgeformt sind, die als Schmiermitteldepot dienen.

Die EP 1 780 446 A1 beschreibt ein Schneckengetriebe, bei dem in einem Schneckenzahnrad aus Kunststoff Schmiermittelreservoirs ausgeformt sind. Diese Schmiermittelreservoire werden mittels einer korrespondierenden Fertigungsschnecke ausgeformt, die eine abrasive Oberfläche aufweist.

### Offenbarung der Erfindung

### Vorteile der Erfindung

Das erfindungsgemäße Verfahren mit den Merkmalen des unabhängigen Anspruchs hat demgegenüber den Vorteil, dass durch die Ausbildung einer Rillenstruktur, die sich mit den Schneckenflanken der Gewindeschnecke in deren Umfangrichtung erstreckt, einerseits ein Schmiermittel-Depot an den stark beanspruchten Schneckenflanken zur Verfügung gestellt wird, und andererseits gezielt die Selbsthemmung einer solchen Getriebeschnecke beeinflusst werden kann. Dabei wird zuerst durch Rollieren die Verzahnungsgeometrie erzeugt, die eine definiert glatte Oberfläche aufweist.- Danach werden in die glatte Oberfläche konzentrisch zur Längsachse der Getriebeschnecke verlaufende Rillen ausgeformt. Das hat den entscheidenden Vorteil, dass die gesamten Oberflächen der Schneckenflanken ständig mit ausreichend Schmiermittel versorgt werden - und gleichzeitig ein direkter Kontakt der Spitzen der Rillenstruktur mit der Gegenverzahnung besteht. Dieser direkte Kontakt der Spitzen der Rillenstruktur zur Gegenverzahnung kann zur Einstellung der Selbsthemmung der Verzahnung genutzt werden. Über die Tiefe der Rillen kann das Ausmaß der Schmierung der Verzahnung und gleichzeitig auch die Anlagefläche der Spitzen der Rillenstruktur mit der Gegenverzahnung vorgegeben werden.

Erfindungsgemäß kann die konzentrische Rillenstruktur in der rollierten Oberfläche der Schneckenflanken sehr gezielt mittels Bandschleifen ausgebildet werden. Dabei besteht die Möglichkeit, mit dem Schleifband gezielt die Schneckenflanken der Getriebeschnecke aufzurauen, indem kreisförmige Rillen in Umfangsrichtung eingeschliffen werden können. Über die Wahl des Schleifbandes und des Anpressdruckes kann auf einfache Weise die Tiefe und der radiale Abstand der Rillen vorgegeben werden.

Durch die in den abhängigen Ansprüchen aufgeführten Maßnahmen sind vorteilhafte Weiterbildungen des Herstellungsverfahrens und der Vorrichtungen nach den abhängigen Ansprüchen möglich.

Hierzu kann besonders vorteilhaft das flexible Schleifband mit einem profilierten Kontaktstück unmittelbar gegen die Oberfläche der Schneckenflanken gedrückt werden. Das Profil des Kontaktstücks entspricht dabei der Ausformung der Schneckenverzahnung, so dass das flexible Schleifband in einem bestimmten Winkelsegment der Getriebeschnecke flächig an der Schneckenflanke anliegt.

Um konzentrische regelmäßige Rillen in der Oberfläche der Schneckenflanken auszubilden, eignet sich das Band- Finishing-Verfahren. Dabei liegt das Schleifband in Tangentialrichtung zur Getriebeschnecke unmittelbar an den Schneckenflanken an, so dass im radial äußeren Bereich der Getriebeschnecke im Bereich der Schneckenflanken kreisförmige Rillen in die Schneckenflanken geschliffen werden können.

Dabei wird bevorzugt die Gewindeschnecke mit den anrollierten Schneckenflanken in Rotation versetzt, wodurch das Schleifband entlang der wendelförmigen Steigung der Schneckenflanken an diesen entlang bewegt wird, und dadurch die Zahnflanken über den gesamten axialen Bereich der Gewindeschnecke geschliffen werden. Durch die Ausbildung solcher konzentrischen Rillen ist die Rauigkeit einer solchen Rillenstruktur in Umfangsrichtung relativ gering. Dadurch wird der Verschleiß der Rillen minimiert. In Radialrichtung quer zu den Rillen hingegen kann die Rauigkeit definiert eingestellt werden. Beim Stillstand des Getriebes kann sich das Schmiermittel in die Rillen zurückziehen, so dass die Spitzen der Rillenstruktur in direktem Kontakt mit der Gegenverzahnung stehen, wodurch die Selbsthemmung verbessert werden kann.

Beim Bandschleifen wird einerseits die rollierte Gewindeschnecke in Rotation versetzt und gleichzeitig weist das Schleifband eine eigene Vorschubgeschwindigkeit auf. Durch das Verhältnis dieser beiden Bewegungen kann das Profil der Rillenstruktur entsprechend beeinflusst werden.

Ein solches Verfahren eignet sich sehr für eine Massenproduktion von Getriebeschnecken, bei der zuerst lange Metallstangen mittels Durchgangsrollieren zu einer Schnecke umgeformt werden, und anschließend mittels Bandschleifen die konzentrischen Rillen in die Schneckenflanken eingegraben werden. Dadurch kann praktisch Meter-Ware von fertigen Gewindestangen mit einer konzentrischen Rillenstruktur hergestellt werden, die dann auf die gewünschte Länge gekürzt werden können.

Besonders bevorzugt weist solch eine Getriebeschnecke eine zentrale Längsbohrung auf, mittels der die Gewindeschnecke auf eine Getriebewelle aufgeschoben wird. Dabei kann die Getriebewelle bevorzugt direkt die Ankerwelle des Elektromotors sein. Fertigungstechnisch besonders günstig ist es, wenn die Getriebeschnecke direkt auf der Welle aufgepresst wird, vorzugsweise auf einen zuvor profilierten Bereich der Welle, um eine Presspassung auszubilden. Alternativ kann die Gewindehülse auch mittels Kleben oder einer anderen Materialumformung auf der Welle fixiert werden.

Für die Serienproduktion der Gewindestangen kann das Bandschleifen unmittelbar mit dem Rollieren kombiniert werden. Dabei kann das Schleifband beispielsweise axial unmittelbar hinter den Rollierscheiben angeordnet werden, so dass beim Anformen der wendelförmigen Gewindeschnecke auf die Metallstange direkt nach dem axialen Durchlaufen der Rollierscheiben die Metallstange axial zum Schleifband hin verschoben wird. Dadurch kann eine lange Metallstange in einem Arbeitsprozess zuerst axial durch die Rollierwerkzeuge und in derselben Zustellung axial unmittelbar danach durch die Schleifvorrichtung hindurch geschoben werden.

Beim Rollieren kann auf sehr einfache Weise eine qualitativ hochwertige hochverdichtete Oberfläche mit einer Rauigkeit von kleiner als ein µm erzeugt werden, die eine lange Lebensdauer hat. Durch das Band-Finishen können anschließend in diese glatte Oberfläche der Schneckenflanken wieder Rillen in Umfangsrichtung eingeschliffen werden, so dass die Oberfläche der Rillenstruktur in Radialrichtung zu einer Rauigkeit von Rz = 0.2 µm bis 20 µm aufgeraut wird. Durch eine solche Rillenstruktur wird zuverlässig verhindert, dass die Schneckenflanken im Stillstand des Getriebes ständig über einen ununterbrochenen Schmierfilm mit der Gegenverzahnung verbunden sind. Dadurch, dass nun Spitzen der Rillen unmittelbar an der Gegenverzahnung anliegen, kann damit eine gewünschte Selbsthemmung eingestellt werden.

Die Tiefe und das Profil der Rillen kann sowohl über die Eigenschaften des Schleifbandes, als auch über den Anpressdruck des Schleifbandes, bzw. des Kontaktstückes, eingestellt werden. Dabei kann auf einfache Weise bei geänderten Anforderungen an die Selbsthemmung gemäß der gewünschten Anwendung des Schneckengetriebes ohne große Werkzeugkosten die Rillenstruktur in der rollierten Schneckenflanke entsprechend variiert werden. Ein solches Verfahren aus Kombination von Rollieren und Band-Finishen ist deutlich kostengünstiger, als ein spanendes Herstellungsverfahren mittels Fräsen oder Drehen.

Eine solche erfindungsgemäß hergestellt Getriebeschnecke kann mit einer konzentrischen Rillenstruktur angefertigt werden, die gezielt an das verwendete Schmiermittel und an die Oberfläche der Gegenverzahnung angepasst ist.

Als Rohmaterial für die Getriebeschnecke wird bevorzugt eine Metallstange, insbesondere aus Stahl, verwendet, die mittels den Rollierscheiben plastisch umgeformt wird, um eine sehr glatte Oberfläche der Schneckenflanken zur Verfügung zu stellen. In eine solche rollierte Metalloberfläche kann mittels dem Bandschleifen eine definierte Rillenstruktur eingegraben werden, bei dem die Rillen sehr regelmäßig und gleichförmig in Umfangsrichtung zur Schneckenlängsachse ausgebildet sind.

Besonders vorteilhaft ist die Verwendung der erfindungsgemäßen Getriebeschnecke in einer elektromotorischen Antriebseinheit, bei der an einen Elektromotor axial unmittelbar ein Getriebegehäuse angeflanscht ist. Dabei wird das Drehmoment vom Elektromotor mittels einer Ankerwelle auf ein Schneckengetriebe übertragen, dass zusätzlich zur erfindungsgemäßen Getriebeschnecke ein Schneckenrad mit einer Schneckenradverzahnung aufweist, das mit den Schneckenflanken in Eingriff steht. Dabei ist es besonders günstig, die Getriebeschnecke unmittelbar auf der Ankerwelle anzuordnen, die bevorzugt axial in das Getriebegehäuse hineinragt. Das Schneckenrad ist dabei bevorzugt aus Kunststoff - beispielsweise als Spritzgussteil - ausgebildet und direkt drehbar im Getriebegehäuse gelagert. Das Schneckenrad weist beispielsweise ein Abtriebselement auf, das dann das untersetzte Drehmoment des Elektromotors an ein zu verstellendes oder anzutreibendes Teil überträgt. In einer alternativen Ausführung kann die Getriebeschnecke auch unmittelbar auf der Ankerwelle des Elektromotors aufrolliert und anschließend mittels Bandschleifen bearbeitet sein. Eine solche erfindungsgemäße Antriebseinheit mit einem hohen Wirkungsgrad und einer einstellbaren Selbsthemmung eignet sich in besonderer Weise als Fensterheber-Schiebedach- oder Sitzverstell-Antrieb im Kraftfahrzeug.

### Kurze Beschreibung der Zeichnungen

Ausführungsbeispiele der Erfindung sind in den Zeichnungen dargestellt und in der nachfolgenden Beschreibung näher erläutert. Es zeigen
- Fig. 1: ein erfindungsgemäßes Herstellungsverfahren für eine Getriebeschnecke,
- Fig. 2: eine schematische Darstellung einer erfindungsgemäßen Schneckenflanke, und
- Fig. 3: eine erfindungsgemäße Getriebe-Antriebseinheit.

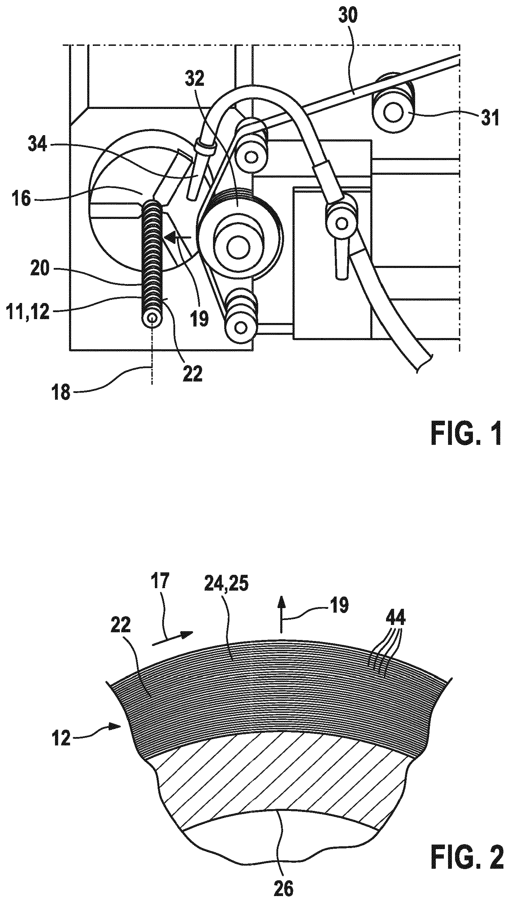

In Fig. 1 ist schematisch ein Verfahren zur Herstellung einer Getriebeschnecke 12 dargestellt, bei dem zuerst eine Getriebeschnecke 12 mittels einem Rollierwerkzeug aus einer Metallstange ausgeformt wird. Eine solche Gewindestange 11 mit angeformten Schneckenflanken 22 einer Schneckenverzahnung 20 ist in Fig. 1 drehbar in einer Werkzeugaufnahme 16 gelagert. Anschließend wird eine Rillenstruktur 24 in die Schneckenflanken 22 der Schneckenverzahnung 20 ausgebildet. Hierzu wird ein flexibles Schleifband 30 mittels eines profilierten Kontaktstücks 32 in Radialrichtung 19 gegen die Gewindestange 11 eingestellt und gegen die Schneckenflanken 22 gedrückt. Das profilierte Kontaktstück 32 ist in Fig. 1 als elastische Kontaktrolle - z. B. aus Gummi - ausgebildet. In einer alternativen Ausführung ist das Kontaktstück 32 als in Richtung des Schleifpapiers gerade starre Führungsschiene - z. B. aus Aluminium - ausgebildet, über die das Schleifband gezogen wird. Die Schneckenflanken 20 verlaufen dabei wendelförmig um eine Längsachse 18 der Getriebeschnecke 12. Daher wird das Schleifband 30 in Längsrichtung 18 gegen die Schneckenflanken 22 gedrückt, wobei gleichzeitig die Getriebeschnecke 12 in der Werkzeugaufnahme 16 in Rotation versetzt wird. Durch diese Rotation der Getriebeschnecke 12 wird das Schleifband 30 zusammen mit dem Kontaktstück 32 entlang der Schneckenflanke 22 über die gesamte Länge der Gewindeschnecke 12 bewegt. Gleichzeitig wird auch das Schleifband 30 über einen separaten Antrieb 31 in Relativbewegung versetzt. Dadurch werden konzentrische Rillen 25 in die Oberfläche der Schneckenflanken 22 eingeschliffen. Zusätzlich kann das Schleifband 30 während des Schleifvorganges mittels einer Schmiervorrichtung 34 geschmiert werden. Beim Bandschleifen wird das Schleifband im Bereich der Schneckenflanken 22 tangential zur Getriebeschnecke 12 geführt und mit dem profilierten Kontaktstück 32 axial gegen die Schneckenflanken 22 gepresst. Beispielsweise kann die Länge solch einer Gewindestange bis zu 1,5 m betragen, um dann nach dem Schleifvorgang auf die gewünschte Länge abgeschnitten zu werden.

Fig.2 zeigt eine Detailansicht auf den Ausschnitt einer Schneckenflanke 22, die sich wendelförmig um einen zylindrischen Grundkörper der Getriebeschnecke 12 erstreckt. Die Schneckenflanke 22 weist eine Steigung, beziehungsweise Ganghöhe auf, die das Übersetzungsverhältnis eines Schneckengetriebes 50 bestimmt. Die Schneckenflanke 22 war zuerst mittels Rollieren mit einer sehr glatten Oberfläche mit einer Rauigkeit Rz von bis zu 0.2 µm ausgebildet. Danach wurden kreisförmige Rillen 25 in die Schneckenflanken 22 eingeschliffen, die sich bevorzugt über den gesamten Umfang der Getriebeschnecke 12 in Umfangsrichtung 17 erstrecken. Die Rauigkeit Rz der Rillen in Radialrichtung 19 liegt nun im Bereich von 0.5 µm bis 5 µm. Die Rauigkeit Rz kann alternativ jedoch auch im Bereich von 0.2 µm bis 20 µm liegen. I m Betriebszustand ist in den Rillen 25 als Fettdepot Schmiermittel angeordnet, das den Wirkungsgrad im Bewegungszustand erhöht. Im Stillstand der Getriebeschnecke 12 liegen die Spitzen 44 der Rillenstruktur 24 direkt an der Verzahnung des Schneckenrads 52 an und das Schmiermittel kann sich in die Rillen 25 zurückziehen. Daher weist solch ein Schneckengetriebe 50 eine relativ hohe Selbsthemmung auf, um beim lastseitigen Einwirken eines Drehmomentes das Rückdrehen des Schneckengetriebes 50 zu verhindern.

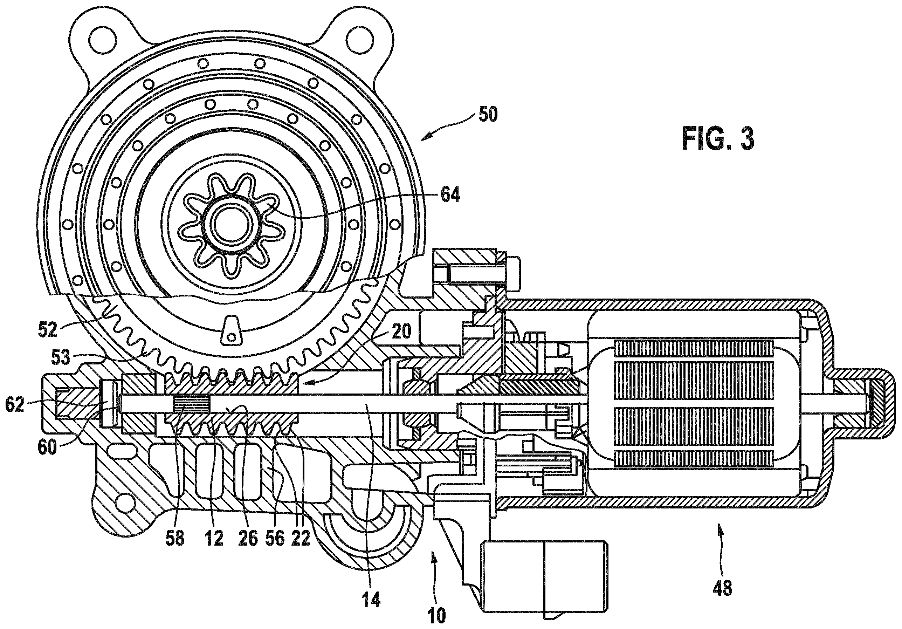

Eine erfindungsgemäße Getriebe-Antriebseinheit 10 ist in Fig. 3 abgebildet. Ein Elektromotor 48 weist eine Ankerwelle 14 auf, die in ein Getriebegehäuse 56 hineinragt, das sich axial an den Elektromotor 48 anschließt. Auf der Ankerwelle 14 ist die Getriebeschnecke 12 angeordnet, im Ausführungsbeispiel insbesondere auf eine Materialumformung 58 der Ankerwelle 14 axial aufgepresst. Dazu weist die Getriebeschnecke 12 eine Bohrung 26 auf, die sich beispielsweise als Durchgangsöffnung über die gesamte axiale Länge der Getriebeschnecke 12 erstreckt. Die Schneckenverzahnung 20 greift in eine korrespondierende Gegenverzahnung 53 des Schneckenrads 52, das drehbar im Getriebegehäuse gelagert ist. Dabei liegen die Zahnflanken 22 der Getriebeschnecke 12 an den Zähnen des Schneckenrads 52 an. Das Schneckenrad 52 ist hier aus Kunststoff gefertigt, vorzugsweise als Spritzgussteil. Die Oberfläche der Zähne des Schneckenrads 52 können auch optional punktuell eine gewisse Oberflächenstruktur aufweisen, die als Schmiermitteldepot ausgebildet sei kann. An den Zahnflanken 22 der Getriebeschnecke 12 sind umlaufende Rillen 25 eingeschliffen, die ebenfalls als Schmiermitteldepot wirken. Je nach Drehrichtung des Elektromotors 48 liegt entweder eine Schneckenflanke 22 einer ersten axialen Seite der Schneckenverzahnung 20 oder bei entgegengesetzter Drehrichtung die axial gegenüberliegende Schneckenflanke 22 der Schneckenverzahnung 20 kraftbeaufschlagt an den Zähnen 53 des Schneckenrads 52 an. Das freie Ende der Ankerwelle 14 wird im Getriebegehäuse 56 radial abgestützt, damit die Schneckenverzahnung 20 auch bei großer Last zuverlässig im Eingriff mit den Zähnen 53 des Schneckenrads 52 bleibt. In Längsrichtung ist die Ankerwelle 14 mittels eines Dämpfelement 62 gelagert, um störende Geräusch beim Verfahren gegen einen Anschlag 60 zu vermeiden. Am Schneckenrad 52 ist ein Abtriebselement 64 angeordnet, das das Drehmoment beispielsweise auf ein zu verstellendes Teil im Kraftfahrzeug überträgt. Bevorzugt ist eine solche Getriebe-Antriebseinheit 10 als Fensterheberantrieb oder Schiebedachantrieb oder als Sitzversteller ausgebildet.

Es sei angemerkt, dass hinsichtlich der in den Figuren und in der Beschreibung gezeigten Ausführungsbeispiele vielfältige Kombinationsmöglichkeiten der einzelnen Merkmale untereinander möglich sind. So kann beispielsweise der Elektromotor 48 mit unterschiedlichen Getriebebauformen des Schneckengetriebes 50 kombiniert werden. Ebenso kann die die Getriebeschnecke 12 anstelle eines separat gefertigten Teils direkt auf die Ankerwelle 14 aufrolliert und anschließend mittels Bandschleifen die konzentrischen Rillen 25 ausgeformt werden. Ebenso kann die Gewindeschnecke 12 mit einem Sackloch 26 hergestellt werden, mit dem diese auf eine Welle aufgeschoben wird. Anstelle dem Aufpressen kann die Getriebeschnecke 12 auch aufgeklebt oder auf andere Weise auf einer Getriebewelle befestigt werden. Ebenso ist das erfindungsgemäße Herstellungsverfahren auch für Anwendungen von Getriebeschnecken 12 außerhalb der Stellantriebe im Kraftfahrzeug nutzbar.

## Patentansprüche

1. Verfahren zum Herstellen einer Getriebeschnecke (12), die insbesondere auf einer Ankerwelle (14) einer elektromotorischen Antriebseinheit (10) angeordnet ist, wobei zuerst mittels einem Rollierwerkzeug eine Schneckenverzahnung (20) mit axial auf einer Längsachse (18) gegenüberliegenden Schneckenflanken (22) angeformt wird, und anschließend mittels eines weiteren Prozess-Schrittes auf die Schneckenflanken (22) eine um die Längsachse (18) konzentrische Rillenstruktur (24) ausgebildet wird, wobei die konzentrische Rillenstruktur (24) mittels Bandschleifen hergestellt wird.

2. Verfahren nach Anspruch 1, **dadurch gekennzeichnet, dass** zum Bandschleifen ein flexibles Schleifband (30) - insbesondere ein Schleifpapier - verwendet wird, das mittels eines profilierten Kontaktstücks (32) gegen die Schneckenflanken (22) gepresst wird - vorzugsweise gleichzeitig gegen zwei in einer Gewindefurche gegenüberliegenden Schneckenflanken (22).

3. Verfahren nach einem der Ansprüche 1 oder 2, **dadurch gekennzeichnet, dass** mit dem Schleifband (30) gezielt die Schneckenflanken (22) der Getriebeschnecke (12) aufgeraut werden.

4. Verfahren nach Anspruch 1, **dadurch gekennzeichnet, dass** die konzentrische Rillenstruktur (24) mittels eines feststehenden Schleifblocks, der insbesondere Bimsstein oder Diamant aufweist, hergestellt wird.

5. Verfahren nach einem der Ansprüche 2 bis 4, **dadurch gekennzeichnet, dass** während dem Bandschleifen die Getriebeschnecke (12) in Rotation versetzt wird, und das Schleifband (30) mit dem Kontaktstück (32) dabei durch die Steigung der Schneckenverzahnung (20) entlang der Schneckenflanken (22) gezogen wird.

6. Verfahren nach einem der Ansprüche 2 bis 5, **dadurch gekennzeichnet, dass** das Schleifband (30) mit einer geringeren Relativgeschwindigkeit bewegt wird, als die Umfangsgeschwindigkeit der Schneckenverzahnung (20) durch die Rotation der Getriebeschnecke (12), um die konzentrische Rillenstruktur (24) auf den Schneckenflanken (22) auszubilden.

7. Verfahren nach einem der vorhergehenden Ansprüche, **dadurch gekennzeichnet, dass** die Getriebeschnecke (12) als separates Bauteil mit einer zentralen Bohrung (26) entlang der Längsachse (18) gefertigt wird, und anschließend auf eine Welle der Antriebseinheit (10) - insbesondere auf die Ankerwelle (14) - aufgepresst wird.

8. Verfahren nach einem der vorhergehenden Ansprüche, **dadurch gekennzeichnet, dass** das Rollierwerkzeug im Durchlaufverfahren mit einem damit direkt verketteten Bandschleifverfahren ein endloses Schneckengewinde ausformt, das danach auf die gewünschte Länge (13) der Getriebeeschnecke (12) abgelängt wird.

9. Verfahren nach einem der vorhergehenden Ansprüche, **dadurch gekennzeichnet, dass** beim Rollieren eine Oberflächenrauigkeit der Schneckenflanken (22) von Rz bis zu 0,5 µm - insbesondere bis zu 0,1 µm - erzeugt wird, und die anschließend ausgebildete konzentrische Rillenstruktur (24) eine strukturierte Rauigkeit von Rz 0.2 µm bis 10 µm aufweist.

10. Verfahren nach einem der Ansprüche 2 bis 9, **dadurch gekennzeichnet, dass** die Tiefe und das Profil der Rillenstruktur (24) sowohl über die Eigenschaften des Schleifbandes (30), als auch über den Anpressdruck des Schleifbandes (30), bzw. des Kontaktstückes (32), eingestellt werden kann.

11. Verfahren nach einem der vorhergehenden Ansprüche, **dadurch gekennzeichnet, dass** die Getriebeschnecke (12) aus Metall hergestellt wird und mit einem Schneckenrad (52) aus Kunststoff zusammenwirkt, das mittels Spritzgießen hergestellt ist.

12. Verfahren nach einem der vorhergehenden Ansprüche, **dadurch gekennzeichnet, dass** die Getriebeschnecke (12) auf einer Ankerwelle (14) eines Elektromotors (48) angeordnet wird, der vorzugsweise unmittelbar an ein Getriebegehäuse (56) eines Schneckengetriebes (50) angeflanscht wird, das die Getriebeschnecke (12) umfasst.

## Claims

1. Method for producing a gear worm (12) which is arranged, in particular, on an armature shaft (14) of an electromotive drive unit (10), wherein a worm toothing system (20) with worm flanks (22) lying axially opposite one another on a longitudinal axis (18) is formed first by means of a roller burnishing tool, and subsequently a groove structure (24) which is concentric around the longitudinal axis (18) is formed on the worm flanks (22) by means of a further process step, wherein the concentric groove structure (24) is produced by belt grinding.

2. Method according to Claim 1, **characterized in that** a flexible sanding belt (30) - in particular a sanding paper - is used for the belt grinding, which is pressed against the worm flanks (22) by means of a profiled contact piece (32) - preferably simultaneously against two worm flanks (22) lying opposite one another in a thread groove.

3. Method according to either of Claims 1 or 2, **characterized in that** the worm flanks (22) of the gear worm (12) are roughened in a targeted manner by way of the sanding belt (30).

4. Method according to Claim 1, **characterized in that** the concentric groove structure (24) is produced by means of a fixed grinding block, which comprises, in particular, pumice stone or diamond.

5. Method according to any one of Claims 2 to 4, **characterized in that**, during the belt grinding, the gear worm (12) is rotated, and the sanding belt (30) is pulled with the contact piece (32) along the worm flanks (22) by the lead of the worm toothing system (20).

6. Method according to any one of Claims 2 to 5, **characterized in that** the sanding belt (30) is moved at a lower relative speed than the circumferential speed of the worm toothing system (20) by the rotation of the gear worm (12) in order to form the concentric groove structure (24) on the worm flanks (22).

7. Method according to any one of the preceding claims, **characterized in that** the gear worm (12) is manufactured as a separate component with a central bore (26) along the longitudinal axis (18), and is subsequently pressed onto a shaft of the drive unit (10) - in particular onto the armature shaft (14).

8. Method according to any one of the preceding claims, **characterized in that** the roller burnishing tool forms an endless worm thread in the throughfeed method with a belt grinding method which is directly linked to the latter, which endless worm thread is then cut to the desired length (13) of the gear worm (12).

9. Method according to any one of the preceding claims, **characterized in that** a surface roughness of the worm flanks (22) Rz of up to 0.5 µm - in particular up to 0.1 µm - is produced during rolling, and the subsequently formed concentric groove structure (24) has a structured roughness Rz of from 0.2 µm to 10 µm.

10. Method according to any one of Claims 2 to 9, **characterized in that** the depth and the profile of the groove structure (24) can be adjusted both via the properties of the sanding belt (30) and via the contact pressure of the sanding belt (30) or the contact piece (32).

11. Method according to any one of the preceding claims, **characterized in that** the gear worm (12) is made of metal and interacts with a worm wheel (52) which is made of plastic and is produced by injection moulding.

12. Method according to any one of the preceding claims, **characterized in that** the gear worm (12) is arranged on an armature shaft (14) of an electric motor (48) which is preferably directly flange-connected to a gear housing (56) of a worm gear (50) which comprises the gear worm (12).

## Revendications

1. Procédé de fabrication d'une vis sans fin de transmission (12) qui est notamment disposée sur un arbre d'ancrage (14) d'une unité d'entraînement à moteur électrique (10), dans lequel on forme d'abord, au moyen d'un outil de roulage, une denture de vis sans fin (20) avec des flancs de vis sans fin (22) opposés axialement sur un axe longitudinal (18), puis, au moyen d'une autre étape du processus, une structure rainurée (24) concentrique est réalisée autour de l'axe longitudinal (18) sur les flancs de vis sans fin (22), la structure rainurée concentrique (24) étant produite au moyen d'un meulage à bande.

2. Procédé selon la revendication 1, **caractérisé en ce que**, pour le meulage à bande, on utilise une bande de meulage flexible (30), en particulier un papier de meulage, qui est pressée contre les flancs de vis sans fin (22) au moyen d'une pièce de contact profilée (32), de préférence simultanément contre deux flancs de vis sans fin opposés dans un sillon fileté (22).

3. Procédé selon l'une des revendications 1 ou 2, **caractérisé en ce que** la bande de meulage (30) permet de rugosifier de manière ciblée les flancs de vis sans fin (22) de la vis sans fin de transmission (12).

4. Procédé selon la revendication 1, **caractérisé en ce que** la structure rainurée concentrique (24) est produite au moyen d'un bloc de meulage fixe comportant notamment de la pierre ponce ou du diamant.

5. Procédé selon l'une des revendications 2 à 4, **caractérisé en ce que**, pendant le meulage à bande, la vis sans fin de transmission (12) est mise en rotation et la bande de meulage (30) avec la pièce de contact (32) est tirée par la pente de la denture de vis sans fin (20) le long des flancs de vis sans fin (22).

6. Procédé selon l'une des revendications 2 à 5, **caractérisé en ce que** la bande de meulage (30) est déplacée à une vitesse relative inférieure à la vitesse circonférentielle de la denture de vis sans fin (20) par la rotation de la vis sans fin de transmission (12) pour former la structure rainurée concentrique (24) sur les flancs de vis sans fin (22).

7. Procédé selon l'une des revendications précédentes, **caractérisé en ce que** la vis sans fin de transmission (12) est fabriquée en tant que composant séparé avec un alésage central (26) le long de l'axe longitudinal (18), puis pressée sur un arbre de l'unité d'entraînement (10), en particulier sur l'arbre d'ancrage (14).

8. Procédé selon l'une des revendications précédentes, **caractérisé en ce que** l'outil de roulage forme un filetage de vis sans fin continu dans un procédé continu avec un procédé de meulage à bande qui lui est directement enchaîné, qui est ensuite découpé à la longueur souhaitée (13) de la vis sans fin de transmission (12).

9. Procédé selon l'une des revendications précédentes, **caractérisé en ce que**, lors du roulage, une rugosité superficielle des flancs de vis sans fin (22) de Rz jusqu'à 0,5 µm - en particulier jusqu'à 0,1 µm - est produite et la structure rainurée concentrique (24) formée par la suite présente une rugosité structurée de Rz 0,2 µm à 10 µm.

10. Procédé selon l'une des revendications 2 à 9, **caractérisé en ce que** la profondeur et le profil de la structure rainurée (24) peuvent être réglés à la fois par les propriétés de la bande de meulage (30) et par la pression de la bande de meulage (30) ou de la pièce de contact (32).

11. Procédé selon l'une des revendications précédentes, **caractérisé en ce que** la vis sans fin de transmission (12) est faite de métal et interagit avec une roue à vis sans fin (52) en matière plastique produite par moulage par injection.

12. Procédé selon l'une des revendications précédentes, **caractérisé en ce que** la vis sans fin de transmission (12) est placée sur un arbre d'ancrage (14) d'un moteur électrique (48), de préférence directement bridé sur un carter de transmission (56) d'une transmission à vis sans fin (50) qui comprend la vis sans fin de transmission (12).
